# EUROPEAN PATENT APPLICATION

(11) **EP 1 580 994 A2**
(43) Date of publication of application: **28.09.2005**
(21) Application number: 04255914.6
(22) Date of filing: 28.09.2004
(51) Int. Cl.: H04N 5/76

(54) **Video data recording/reproducing apparatus and method**

(30) Priority: 26.03.2004 JP 2004091649; 10.08.2004 JP 2004233059
(71) Applicant: D&M Holdings, Inc., Kanagawa 228-8505 (JP)
(72) Inventor: Kudara, Makoto, Shirakawa-shi, Fukushima 961-0813 (JP)
(74) Representative: Hackney, Nigel John

(57) **Abstract**

A video data recording/reproducing apparatus (1) according to the present invention includes a recording section (601) which records and erases video data, a switching section (2) which switches input signals of the video signal to be recorded in the recording section (601), a reproducing section (6) which reproduces the video data recorded in the recording section (601) with respect to each program, and a viewing/listening determination section (7) which determines whether or not viewing and listening of the program have been completed based on a recording time and a proportion of reproduced time of the video data of the program, and when it is determined that viewing and listening to the program have been completed, the viewing/listening determination section (7) sets the video data of the program as erasable/overwritable.

## Description

The present invention relates to a video data recording/reproducing apparatus and method.

In a conventional video data recording/reproducing apparatus, which records and reproduces video data such as broadcast program, a recording capacity of a recording medium such as a hard disk (HDD) is limited. Therefore, it is general to reserve a recordable area by erasing a program which has already been reproduced, for example. Accordingly, this type of apparatus has functions to manage details of record, such as a recorded date and time, a title, and information as to erase-inhibition (protecting function), display these record details on a menu screen, and then receive an instruction from a user regarding a program to be erased.

Another type of video data recording/reproducing apparatus is known having a function such as automatically adjusting a recording quality so as to reduce data amount, if the recording capacity becomes insufficient while a program is being recorded, thereby allowing the entire program to be recorded.

There is another type of apparatus, which is further provided with a function to overwrite over a recording area where the previously recorded program is located (overwrite programming), if the apparatus is, for example, programmed to record the same program on the same time of the same day every week. This overwrite programming automatically determines, by detecting an available area, whether the previously recorded program is to be overwritten, or recording is performed in another area (the Unexamined Japanese Patent Application Laid-Open KOKAI Publication No. 2003-179839).

There is another type of video data recording/reproducing apparatus, which has a function to give a priority to each program having been recorded, and to overwrite a new program over a recording area of a program having the lowest priority, in the case of shortage of recording area in the hard disk or the like (the Unexamined Japanese Patent Application Laid-Open KOKAI Publication No. 2002-305706). With this function above, by lowering the priority of the already reproduced program, it is possible to overwrite data of a new program over the recording area where data of the already viewed/listened program is recorded, while the program which has not been viewed/listened yet remains on the disk.

There is a technique to inquire a user whether or not it is permitted to erase the video data of a reproduced program in the case where reproduction of the recorded program has been reproduced at least for a certain period of time or up to a certain proportion of the program. According to the user's instruction, the video data is erased or reserved (the Unexamined Japanese Patent Application Laid-Open KOKAI Publication No. 2003-23590). As for a broadcast program, focusing on that video data other than the main program, such as commercial messages or previews, is recorded after the end of the main program, the program can be targeted for erasure even if reproducing operation thereof is stopped without reproducing such commercial messages and the like after the main program, as far as the program has been reproduced at least for a certain period of time. With such a procedure above, it is possible to simplify the operational works in erasing.

In recent years, as the capacity of a recording medium increases, the number of recorded programs of video data increases proportionately. Though it is possible to display contents of the programs which have been recorded, there may be a case that a program to be erased should be selected out of the programs thus recorded, if the capacity of the recording medium is not sufficient enough to record a new program. In the technique as described in the Unexamined Japanese Patent Application Laid-Open KOKAI Publication No. 2003-23590, a recorded program, which has been reproduced at least for a certain period of time or up to a certain proportion of the program, may be set as a target for erasing. In this prior art, for instance, if the program contains only the main part without any commercial messages or the like but the user stops the reproduction in midstream after a lapse of a certain period of time, this program may also be set as a target for erasing. For example, if the user temporarily suspends the reproduction in the latter part of the program, which may be a climax scene of a movie and the like, the program may be set as a target for easing. This may be disadvantage for the user.

The present invention has been made considering the situation above, and it is advantageous in enhancing a usability of the video data recording/reproducing apparatus and method.

A video data recording/reproducing apparatus according to one aspect of the present invention includes,
a recording/reproducing section which records inputted video data, sets the recorded video data as erasable/overwritable, and reproduces the recorded video data with respect to each program, and
a viewing/listening determination section which determines whether or not viewing and listening to the program have been completed based on a reproduced proportion in the video data of the program, when reproducing of the video data by the recording/reproducing section is stopped at some midpoint of the program, wherein,
a recording/reproducing section sets the video data of the program to erasable/overwritable, if the viewing/listening determination section determines that viewing and listening to the program recorded in the recording/reproducing section have been completed.

A reproducing method according to another aspect of the present invention includes:
a recording step which records inputted video data and a reproducing step which reproduces the recorded video data with respect to each program,
a determining step which determines whether or not viewing and listening to the program have been completed, based on a reproduced proportion in the video data of the program, if reproducing of the video data in the reproducing step is stopped at some midpoint of the program, and
an setting erasable/overwritable step which sets the video data of the program as erasable/overwritable, if the determining step determines that viewing and listening to the program being recorded have been completed.

### BRIEF DESCRIPTION OF THE DRAWINGS

FIG. 1 is a schematic block diagram showing the video data recording/reproducing apparatus to which the first embodiment of the present invention has been applied.
FIG. 2 is an illustration showing an example of settings which are recorded in the setting recording section 602 in FIG. 1.
FIG. 3 is a flow diagram to explain an operational flow of the video data recording/reproducing apparatus 1 to which the first embodiment of the present invention has been applied.
FIG. 4A is an illustration showing video data of video signals inputted from receiving section 201 in a status where the video data (program A) with 60-minute recording time has not been reproduced yet.
FIG. 4B is an illustration showing a status where the program A has been reproduced for 30 minutes.
FIG. 4C is an illustration showing a status where the program A has been reproduced for 50 minutes.
FIG. 4D is an illustration showing video data of video signals inputted from external input terminal 202 in a status where the video data (program B) with 60-minute recording time has been reproduced for 50 minutes.
FIG. 5 is a schematic block diagram showing the video data recording/reproducing apparatus to which the second embodiment of the present invention has been applied.
FIG. 6 is an illustration showing an example of settings recorded in the setting recording section 602'.
FIG. 7 is a flow diagram to explain automatic dubbing operation of the recording/reproducing apparatus 1 to which the second embodiment of the present invention has been applied.
FIG. 8 is an illustration showing an example of the settings recorded in the setting recording section 602".
FIG. 9 is a flow diagram showing every week recording operation of the video data recording/reproducing apparatus 1 to which the third embodiment of the present invention has been applied.
FIG. 10 is a diagram showing a variation of the first embodiment of the present invention.

### BEST MODE FOR CARRYING OUT THE INVENTION

Hereinafter, preferred embodiments of the present invention will be explained with reference to the accompanying drawings.

### <<First Embodiment>>

At first, the first embodiment of the present invention will be explained.

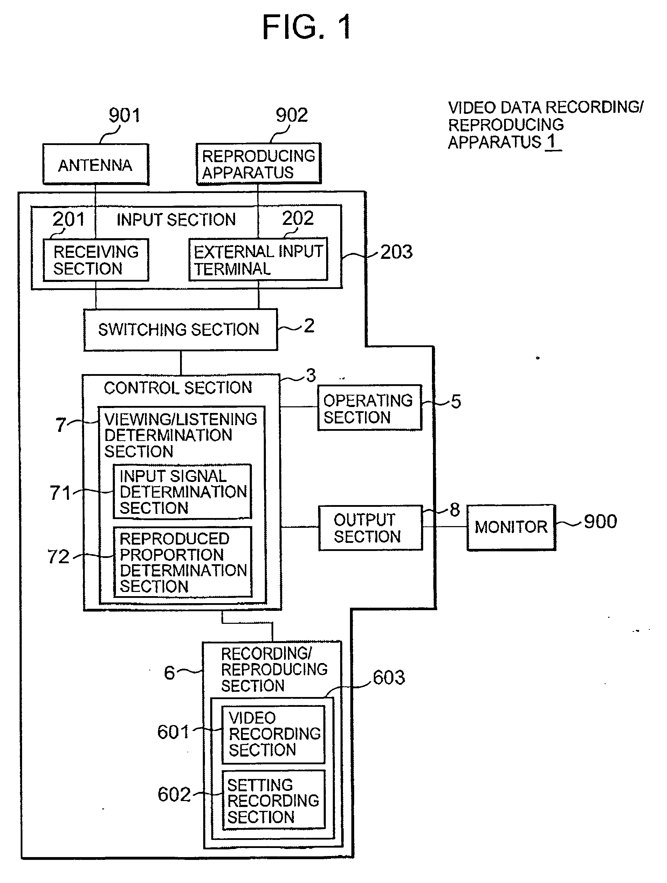

FIG. 1 is a schematic block diagram showing the video data recording/reproducing apparatus to which the first embodiment of the present invention has been applied.

As illustrated in FIG. 1, the video data recording/reproducing apparatus 1 according to the present embodiment includes a switching section 2, a control section 3, an operating section 5, a recording/reproducing section 6, an output section 8 and an input section 203.

The input section 203 includes a receiving section 201 to receive a broadcast signal and an external input terminal 202 to input a video signal. The receiving section 201 receives a television broadcast signal via an antenna 901, and converts the television broadcast signal thus received to a video signal. The receiving section 201 then outputs the video signal thus converted to the switching section 2. The external input terminal 202 receives a video signal from a general reproducing apparatus to reproduce a video signal. The external input terminal 202 then outputs the video signal thus received to the switching section 2.

The operating section 5 at least includes, though not illustrated, an input switching instruction key, a reproducing start instruction key, a reproducing stop instruction key, a recording start instruction key, a recording end instruction key, a setting instruction key, and a setting display key.

When the input switching instruction key is operated, the operating section 5 outputs an input switching signal directing input switching on the input section 203, to the control section 3. When the reproducing start instruction key is operated, the operating section 5 outputs a reproducing start instruction signal to the control section 3, directing a reproduction of programs, such as broadcast program and video contents. When the reproducing stop instruction key is operated, the operating section 5 outputs to the control section 3 a reproducing stop instruction signal directing a stop of reproducing the program being reproduced. When the recording start instruction key is operated, the operating section 5 outputs to the control section 3 a recording start instruction signal directing a start of recording the program. When the recording end instruction key is operated, the operating section 5 outputs to the control section 3 a recording stop instruction signal directing a stop of recording the program. When the setting instruction key is operated, the operating section 5 outputs a setting signal indicating various settings to control section 3. When the setting display key is operated, the operating section 5 outputs a setting display signal to the control section 3, to display settings on a monitor 900.

In order to record desired broadcast programs or video contents in accordance with a recording program, which is registered by a user in advance, the operating section 5 automatically generates the recording start instruction signal, the recording stop instruction signal, and the input switching signal, and then outputs those signals to the control section 3.

Under the control of the control section 3, the switching section 2 selects either of the video signal inputted from the receiving section 201 and the video signal inputted from the external input terminal 202, and then outputs the video signal thus selected to the control section 3.

The recording/reproducing section 6 is provided with a recording medium 603 such as a hard disk drive (HDD). The recording medium 603 includes a video recording section 601 on which video data is recorded and a setting recording section 602 on which various settings are recorded with respect to each program of the video data, such as broadcast programs and video contents. It is to be noted that the setting recording section 602 may be separately provided as a buffer memory and the like, instead of being included in the recording medium 603.

Under the control of the control section 3, the recording/reproducing section 6 encodes the video signal into video data in MPEG (Moving Picture Experts Group) format or the like. Then, the video data thus encoded is recorded with respect to each program in the video recording section 601. The recording/reproducing section 6 further decodes the video data of the program recorded in the video recording section 601 and outputs to the output section 8 under the control of the control section 3.

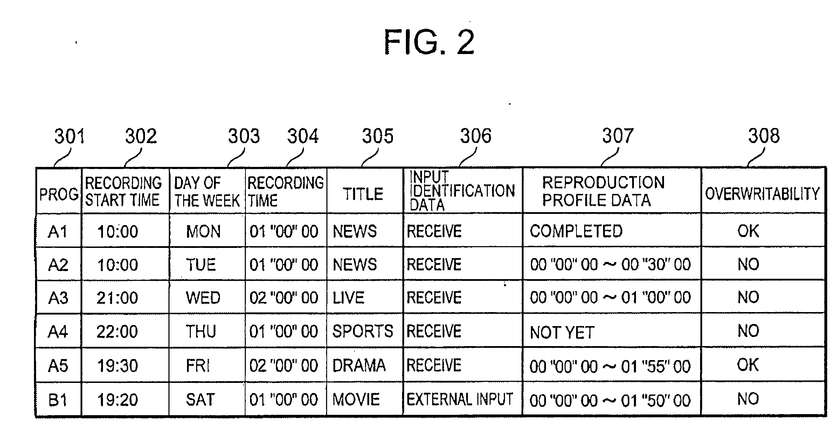

The recording/reproducing section 6 further records settings of the video data with respect to each program recorded in the video recording section 601, in the setting recording section 602. FIG. 2 is an illustration showing an example of settings which are recorded in the setting recording section 602. As illustrated in FIG. 2, a record which registers settings of the program video data includes a field 301 to register identification number of the program (Prog), a field 302 to register a recording start time, a field 303 to register a day of the week when recording is performed, a field 304 to register a recording time, a field 305 to register a title of the program, a field 306 to register input identification data, a field 307 to register reproduction profile data, and a field 308 to register overwritability data.

Here, the input identification data indicates whether the associated program video data contains a video signal inputted from the receiving section 201 or a video signal inputted from the external input terminal 202. The reproduction profile data indicates that a program is in any of the following states; the associated program video data has already been reproduced, not yet reproduced, and reproduced partway (time for reproduction). The overwritability data indicates whether overwriting onto the associated program video data is permitted or not ("overwritable", or "not overwritable"). In addition, it is possible to provide a field to register year/month/date data when the video data was recorded, and a field to register recording quality data.

The output section 8 outputs the video signal outputted from the control section 3 to the monitor 900. It is to be noted that the switching section 2 and the recording/reproducing section 6, as well as the recording/reproducing section 6 and the output section 8, may be directly connected so as to send/receive signals one another.

The control section 3 controls overall operations of the video data recording/reproducing apparatus 1, to control recording and reproducing video data (program) to/from the recording medium 603. The control section 3 has a viewing/listening determination section 7 which determines whether or not the video data recorded on the recording medium 603 has been viewed and listened to. The viewing/listening determination section 7 includes an input signal determination section 71 which determines a video signal selected by the switching section 2, and a reproduced proportion determination section 72 which determines a reproduction status as to the video data recorded on the recording medium 603 (any one of the following states; reproduction completed, not yet reproduced, and reproduced partway (time for reproduction)).

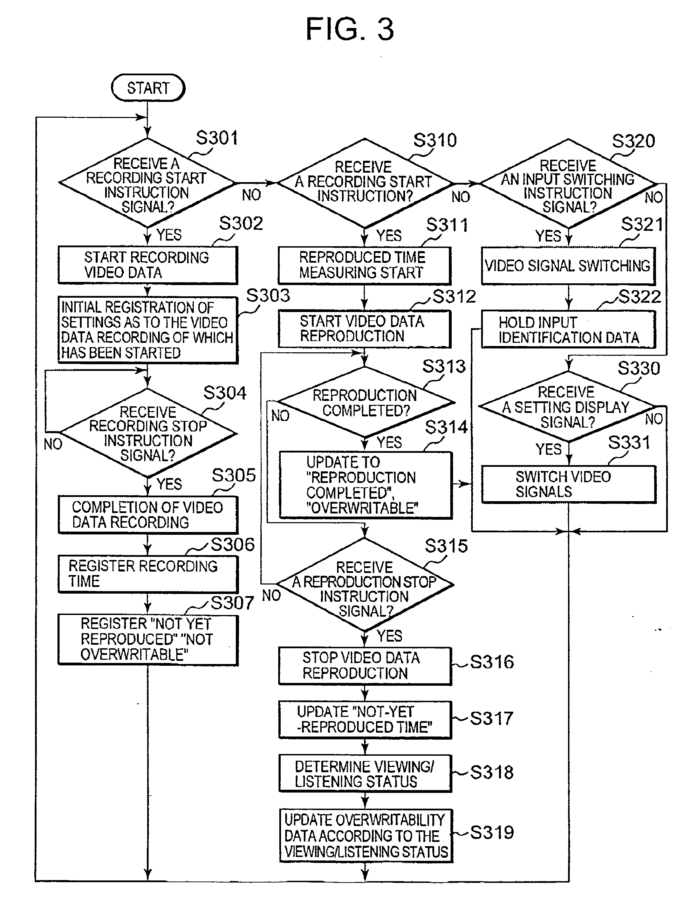

FIG. 3 is a flow diagram to explain an operational flow of the video data recording/reproducing apparatus 1 to which the first embodiment of the present invention has been applied.

When a recording start instruction signal without a designation of program is inputted into the control section 3 from the operating section 5 (S301: YES), the control section 3 outputs the video signal outputted from the switching section 2 to the recording/reproducing section 6 and instructs the recording/reproducing section 6 to start recording. In receipt of this instruction, the recording/reproducing section 6 encodes the video signal received from the control section 3 into a predetermined video data in MPEG format or the like. The recording/reproducing section 6 then starts recording thus encoded video data in the video recording section 601 (S302). At this timing, the recording/reproducing section 6 detects an area available for recording the video data in the video recording section 601. If the available area is less than a predetermined capacity, the recording/reproducing section 6 searches a program video data associated with a record stored in the setting recording section 602, in the field 308 of which record overwritability data indicating "overwritable" is registered. The recording/reproducing section 6 then overwrites the new video data over thus searched video data.

The recording/reproducing section 6 further adds to the setting recording section 602 a new record associated with the video signal, and registers unique identification information in the field 301 of the record, the recording start time in the field 302, the recorded day of the week in the field 303, and input identification data held by the input signal determination section 71 in the field 306 (S303) respectively. If a title of the program represented by the video signal can be obtained based on the information attached to the video signal, this title may be registered in the field 305. It is to be noted that a user may input a title name to the operating section 5, so that the recording/reproducing section 6 registers the title afterwards under the control of the control section 3.

Next, after the recording start instruction signal is inputted from the operating section 5, if a recording end instruction signal is inputted therefrom (S304: YES), the control section 3 stops outputting to the recording/reproducing section 6 of the video signals outputted from the switching section 2, and instructs the recording/reproducing section 6 to stop recording. In receipt of this instruction, the recording/reproducing section 6 completes recording of the video data to the video recording section 601 (S305). Simultaneously, the recording/reproducing section 6 registers a recording time in the field 304 of the record associated with the video data, the record being registered in the setting recording section 602 (S306). The recording/reproducing section 6 further registers reproduction profile data indicating "not yet reproduced" in the field 307 of the record associated with the video data, which is registered in the setting recording section 602, and also registers overwritability data indicating "not overwritable" in the field 308 (S307). Then, the processing returns to step S301. According to the process as described above, all the video data of the programs newly recorded in the video recording section 601 are set to "not yet reproduced" and "not overwritable". It is to be noted that the recording/reproducing section 6 is not allowed to perform overwrite process, such as updating, to the video data of the program set as "not overwritable".

When a reproducing start instruction signal together with a designation of a program is inputted from the operating section 5 (S301: NO, S310: YES), the control section 3 instructs the recording/reproducing section 6 to reproduce video data of the program designated by this signal, out of the video data of the programs recorded in the video recording section 601. The reproduced proportion determination section 72 starts measuring a time for reproduction (S311). If the reproduction of the program video data is started from any midpoint of the program, the recording time from the beginning to the midpoint is set to an initial value of the time for reproduction, and the measurement of the time for reproduction is started. When the recording/reproducing section 6 receives a reproducing instruction together with the program designation from the control section 3, the recording/reproducing section 6 reads video data of the program thus designated from the video recording section 601, and reproduces the video data by decoding into a video signal in MPEG format or the like (S312). The video signal thus reproduced is outputted to the monitor 900 via the control section 3 from the output section 8.

Next, there is assumed a case where the reproducing start instruction signal is inputted from the operating section 5 and reproduction of the program video data recorded in the video recording section 601 is completed, without being inputted a reproducing stop instruction signal from the operating section 5 after starting of reproducing the program video data (S313: YES), that is, the program video data has been reproduced from the beginning to the end. In such a case, the reproduced proportion determination section 72 determines that viewing and listening to the video data of the program is completed. According to a instruction from the control section 3, the recording/reproducing section 6 updates the registered information in the field 307 of the record associated with the program video data, which information is registered in the setting recording section 602, with reproduction profile data indicating that the reproduction has been completed. Simultaneously, the recording/reproducing section 6 changes the overwritability data registered in the field 308 of the record associated with the program video data, from "not overwritable" to "overwritable" (S314). Then, the processing is returned to step S301. It is to be noted that the recording/reproducing section 6 is allowed to perform overwrite processing, such as updating, to the program video data which is set as "overwritable".

After inputting of the reproducing start instruction signal from the operating section 5 and in the course of executing reproduction of the program video data recorded in the video recording section 601, if a reproducing stop instruction signal is inputted from the operating section 5 (S315: YES), the control section 3 stops outputting the program video data to the recording/reproducing section 6, and allows the recording/reproducing section 6 to stop reproducing (S316) . The reproduced proportion determination section 72 notifies the recording/reproducing section 6 of the time for reproduction from the start of reproducing the program video data until it is stopped. In receipt of this notification, the recording/reproducing section 6 updates the registered information in the field 307 of the record associated with the program, with reproduction profile data indicating the time for reproduction thus notified (S317).

Next, the reproduced proportion determination section 72 determines whether viewing and listening to the program have been completed, according to the input identification data, recording time, and reproduction profile data, respectively in the fields 306, 304 and 307 of the record associated with the video data of the program whose reproduction has been stopped or suspended (S318). Based on the result of the determination, the recording/reproducing section 6 updates the registered information in the field 308 of the record associated with the program video data, according to the instruction from the control section 3. If the result indicates that viewing and listening have been completed, the registered information in the field 308 is updated to "overwritable". On the other hand, if the determination result indicates that viewing and listening have not been completed yet, the recording/reproducing section 6 leaves the registered information in the field 308 of the record associated with the program video data as "not overwritable" (S319). Afterwards, the processing returns to step S301.

Specifically, if the input identification data indicates that the video signal is inputted from the receiving section 201 and time period obtained by subtracting the time for reproduction indicated by the reproduction profile data from the recording time, that is, the proportion of not-yet-reproduced time in the recording time, is less than a predetermined value (e.g., 20%), the reproduced proportion determination section 72 of the control section 3 determines that viewing and listening to the program video data have been completed. Alternatively, if the proportion of time for reproduction in the recording time is equal to or more than a predetermined value (e.g., 80%), the reproduced proportion determination section 72 determines that viewing and listening to the program video data have been completed.

On the other hand, if the input identification data indicates that the video signal is inputted from the external input terminal 202, the reproduced proportion determination section 72 of the control section 3 determines that viewing and listening to the program video data have not been completed yet, regardless of the proportion of the not-yet-reproduced time in the recording time (or the proportion of time for reproduction in the recording time).

As for most programs generally broadcasted, a main part of one program starts from the beginning of the program up to 80% thereof, and remaining 20% of the contents consist of commercial messages and a preview for the next. For example, in that case of a program for 60 minutes, the main part lasts for around 50 minutes starting from the beginning of the program, and the remaining around 10 minutes are for commercial messages and a preview for the next. In the case of 30 minutes program, the main part lasts for around 25 minutes starting from the beginning of the program, and the remaining around 5 minutes are for commercial messages and a preview for the next. If the recording time is one hour, a main part of the program is completed at the time when 50 minutes from the beginning of the program have lapsed, and the remaining 10 minutes are for commercial messages and a preview for the next, a user may recognize that the main part has been completed at the timing when 50 minutes from the beginning of the program have lapsed, and may stop reproducing the program.

In this case, even if the user recognizes that he or she has already viewed/listened to the program, the program video data persistently remains without being overwritten as far as the video data recording/reproducing apparatus 1 determines that viewing and listening to the program have not been completed yet. Consequently, the video data may weigh on the storage capacity of the recording medium 603, thereby causing a disadvantage. In the present embodiment, in order to avoid such a disadvantage, when the proportion of the not-yet-reproduced time in the recording time is less than a predetermined value, or the proportion of already-reproduced time in the recording time is equal to or more than the predetermined value, it is determined that viewing and listening to the main part have already been completed, that is, viewing and listening to the program have already been completed.

On the other hand, as for a medium for recording a program such as movie, in many cases, commercial messages or previews are not contained. Therefore, in the present embodiment, in the case where the video signal is inputted from the external input terminal 202, it is determined that viewing and listening to the program have not been completed yet even when the proportion of not-yet-reproduced time in the recording time is less than a predetermined value (for example, 20%). It is because there is a possibility that reproducing was temporarily suspended in the latter half of the program, for example, at a climax of the movie. In other words, when recorded data of a video signal inputted from the external input terminal 202 is reproduced, it is determined that viewing and the listening to the program have been completed, only when all the recorded video data has been reproduced, and if not-yet-reproduced time still remains, it is determined viewing and listening to the program have not been completed yet.

If a recording start signal has not been received (S301: NO, S310: NO) and the input signal determination section 71 determines that an input switching signal has been inputted from the operating section 5 (S320: YES), the control section 3 switches the video signals to be outputted from the switching section 2 (S321). In addition, the control section 3 holds the input identification data representing the video signal selected by the switching section 2 (S322). Then, the processing returns to step S301.

When the control section 3 receives a setting display signal inputted from the operating section 5 (S330: YES), the control section 3 allows the recording/reproducing section 6 to read the settings of each program recorded in the setting recording section 602. The control section 3 then outputs the settings of each program to the monitor 900 via the output section 8 (S331). Subsequently, the processing returns to step S301.

For example, it is assumed that the video recording section 601 records video data of programs A1 to A5 and B1, and the setting recording section 602 records settings as shown in FIG. 2 with respect to each program. It is also assumed that in the case of video data from the receiving section 201, it is determined that viewing and listening to the video data have already been completed, if the proportion of not-yet-reproduced time in the recording time is less than 20%.

When a setting display signal is outputted from the operating section 5, the settings of each of the programs registered in the setting recording section 602 are displayed on the monitor 900 connected to the output section 8. As shown in FIG. 2, as for the program A1, the input identification data indicates that the program corresponds to video signals inputted from the receiving section 201, the recording time is one hour, and the reproduction profile data indicates that the reproduction of the entire program from the beginning to the end has been completed. Therefore, the overwritability data indicating "overwritable" is displayed on the monitor 900.

As for the program A2, the input identification data indicates that the program corresponds to video signals inputted from the receiving section 201, the recording time is one hour, and the reproduction profile data indicates that only 30 minutes of reproduction has been completed (another 30 minutes remain for reproduction). Since the proportion of not-yet-reproduced time in the recording time is equal to 20% or more, the overwritability data indicating "not overwritable" is displayed on the monitor 900.

As for the program A3, the input identification data indicates that the program corresponds to the video signals inputted from the receiving section 201, the recording time is 2 hours, and the reproduction profile data indicates that only one hour of reproduction has been completed (another one hour remains for reproduction). Since the proportion of the not-yet-reproduced time in the recording time is equal to 20% or more, the overwritability data indicating "not overwritable" is displayed on the monitor 900.

As for the program A4, the input identification data indicates that the program corresponds to the video signals inputted from the receiving section 201, the recording time is one hour, and the reproduction profile data indicates that the video data has not been reproduced yet. Therefore, the overwritability data indicating "not overwritable" is displayed on the monitor 900.

As for the program A5, the input identification data indicates that the program corresponds to the video signals inputted from the receiving section 201, the recording time is 2 hours, and the reproduction profile data indicates that only one hour and 15 minutes of reproduction has been completed (5 minutes not yet reproduced). Since the proportion of the not-yet-reproduced time in the recording time is less than 20%, the overwritability data indicating "overwritable" is displayed on the monitor 900.

As for the program B1, the input identification data indicates that the program corresponds to the video signals inputted from the external input terminal 202, the recording time is 1 hour, and the reproduction profile data indicates that only 50 minutes of reproduction has been completed (10 minutes not yet reproduced). Since the video signals are inputted from the external input terminal 202, the overwritability data indicating "not overwritable" is displayed on the monitor 900.

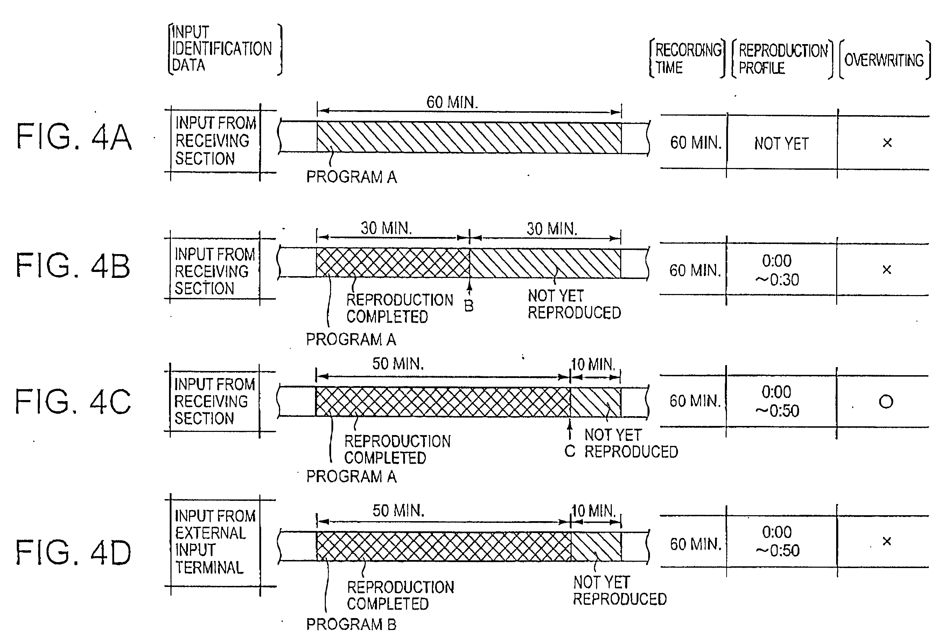

Figs. 4A to 4D are illustrations to explain transitions of settings of the program video data recorded in the setting recording section 602, as to the video data of the programs recorded in the video recording section 601. FIG. 4A is an illustration showing video data of video signals inputted from the receiving section 201 and the recording time of the video data is 60 minutes (program A) and it is in a state of not-yet-reproduced. FIG. 4B is an illustration showing a status of the program A after reproduction of 30 minutes. FIG. 4C is an illustration showing a status of the program A after reproduction of 50 minutes. FIG. 4D is an illustration showing video data of video signals inputted from the external input terminal 202 (program B) and a status where 50 minutes of the video data has been reproduced out of 60 minutes of recording time.

As shown in FIG. 4A, in the case where the program A has not been reproduced yet, video data of which corresponds to the video signals inputted from the receiving section 201, and the recording time thereof is 60 minutes, following data is recorded in the field of the record for the video data of the program A registered in the setting recording section 602: data indicating that the recording time is 60 minutes is recorded in the field 304; reproduction profile data indicating "not-yet-reproduced" is recorded in the field 307; and the overwritability data indicating "not overwritable" is recorded in the field 308.

As shown in FIG. 4B, by manipulating the operating section 5, when reproducing the program A is started and the reproduction is stopped at the timing of 30 minutes from starting of reproduction, data indicating that reproduction has been completed from the beginning of the program to the lapse of 30 minutes is recorded in the field 307. The reproduced proportion determination section 72 determines that viewing and listening to the program A have not been completed to yet, because the recording time of the program A is 60 minutes, the not-yet-reproduced time of the program A detected by the control section 3 is 30 minutes, and then the proportion of the not-yet-reproduced time in the recording time is equal to 20% and more.

As shown in FIG. 4C, by manipulating the operating section 5, when reproducing the program A is started and the reproduction is stopped at the timing of 50 minutes from starting of reproduction, data indicating that reproduction has been completed from the beginning of the program to the lapse of 50 minutes is recorded in the field 307. The reproduced proportion determination section 72 determines that viewing and listening to the program A have already been completed, because the recording time of the program A is 60 minutes, the not-yet-reproduced time of the program A detected by the control section 3 is 10 minutes, and thus the proportion of the not-yet-reproduced time in the recording time is less than 20%. The reproduced proportion determination section 72 then changes the overwritability data in the field 308 from "not overwritable" to "overwritable".

As shown in FIG. 4D, as for the program B, video data of which corresponds to the video signals inputted from the external input terminal 202, if the recording time thereof is 60 minutes and not-yet-reproduced time is only 10 minutes, the reproduced proportion determination section 72 determines that viewing and listening to the program B have not been completed yet, even if the proportion of the not-yet-reproduced time in the recording time is less than 20%, and leaves the overwritability data in the field 308 as "not overwritable".

The first embodiment of the present invention has been explained above. According to the first embodiment, if all the video data of the video signals inputted from the external input terminal 202, recorded in the video recording section 601, have been reproduced entirely, it is determined that viewing and listening to the program represented by the video data have been completed. On the other hand, if there still remains a not-yet-reproduced time, it is determined that viewing and listening to the program have not been completed yet. For example, when the video data of the video signals inputted from the external input terminal 202, corresponding to the 60 minutes recording time, is reproduced, it is determined that viewing and listening to the program have not been completed yet, even if the reproduction is stopped at after a lapse of 50 minutes of reproducing the program video data, because the video data is of video signals inputted from the external input terminal 202. During the time when it is determined that viewing/listening have not completed yet, the video data is set to be "not overwritable". Therefore, erasing the video data can be avoided in the case where the reproduction is suspended on the halfway, thereby providing the user with a better usability.

In addition, according to the present embodiment, when the video data of the video signals inputted from the receiving section 201, recorded in the video recording section 601, is reproduced, if the proportion of the not-yet-reproduced time in the recording time is less than a predetermined value (for example 20%), it is determined that viewing and listening to the program have been completed. Accordingly, for example, if a program of TV variety show of 60 minutes is reproduced, which is programmed with a main part from the beginning to the lapse of around 50 minutes and the remaining around 10 minutes of commercial messages and a preview for the next, it can be determined that viewing and listening to the program have been completed, even if the user stops reproducing at the timing of 50 minutes lapse from the beginning. Furthermore, if a TV animation (cartoon) program of 30 minutes is reproduced, which is programmed with a main part from the beginning to the lapse of around 25 minutes and the remaining around 5 minutes of commercial messages and a preview for the next, it is possible to determine that viewing and listening to the program have been completed, even when the user stops reproducing at the timing of 25 minutes lapse from the beginning. When it is determined as viewing/listening being completed, the video data is set to be "overwritable". Therefore, it is possible to prevent that the storage area in the video recording section 601 is occupied with unnecessary video data.
According to the present embodiment, since as to each program recorded in the video recording section 601, settings such as already reproduced or not, or up to where reproduction has been done, i.e., reproduction proportion, are recorded in the setting recording section 602, it is possible for a user to confirm the settings at a glance with a menu screen or the like.

### <<Second Embodiment>>

Next, the second embodiment of the present invention will be explained.

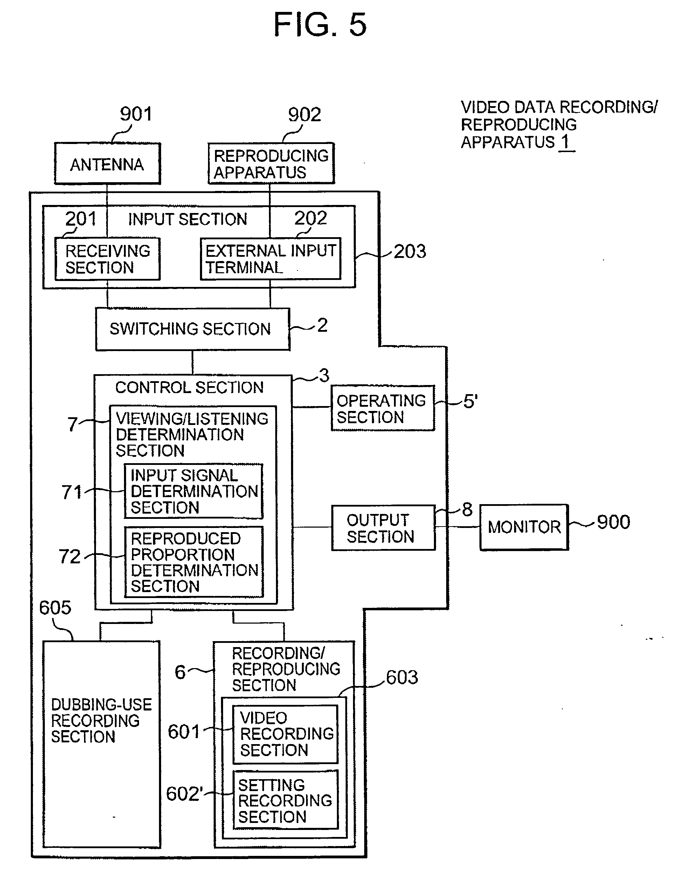

The present embodiment is directed to dubbing operation as to the video data in the video recording section 601, the video data being recorded in the above first embodiment. FIG. 5 is a schematic block diagram of the video data recording/reproducing apparatus to which the second embodiment of the present invention has been applied. As illustrated in FIG. 5, the video data recording/reproducing apparatus of the present embodiment is different from that of the first embodiment as shown in FIG. 1 in the points that an operating section 5' is provided instead of the operating section 5, a setting recording section 602' is provided instead of the setting recording section 602, and a dubbing-use recording section 605 is additionally provided to record video data into a recording medium prepared for dubbing (not illustrated). Other structural elements are the same as those of the first embodiment.

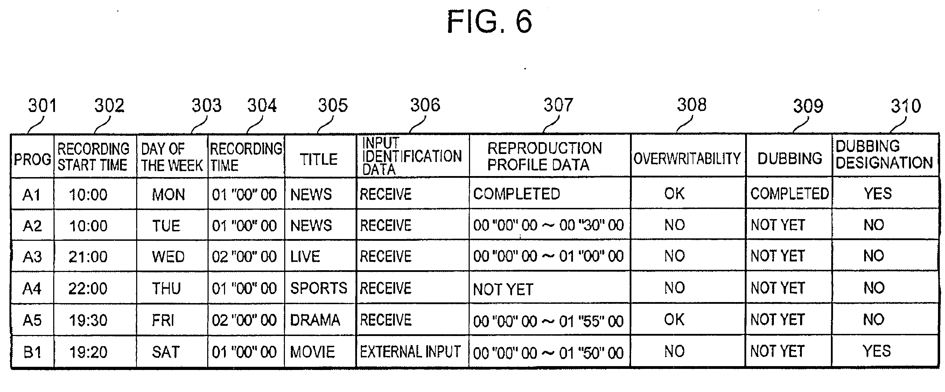

The operating section 5' is provided with a dubbing instruction key (not shown) in addition to various operating keys provided in the operating section 5 of the first embodiment. FIG. 6 is an illustration showing an example of settings recorded in the setting recording section 602'. As illustrated, a record of video data for each program recorded in the setting recording section 602' is added with a field 309 and a field 310, as to each program recorded in the setting recording section 602 in the first embodiment as shown in FIG. 1, the field 309 for registering whether or not dubbing has been performed for the record to another recording medium, and the field 310 for registering whether or not there is a designation of dubbing to another recording medium. In those fields, in the initial status when a record is newly added to the setting recording section 602', "dubbing not performed" and "dubbing not designated" are respectively set.

When a user designates a program and operates a dubbing instruction key on the operating section 5', the operating section 5' outputs a dubbing instruction signal together with the program designation to the control section 3. The control section 3 outputs the dubbing instruction signal thus received from the operating section 5' to the recording/reproducing section 6. The recording/reproducing section 6 specifies a record of the video data of the program designated by the dubbing instruction signal in the setting recording section 602', and changes the dubbing designation data registered in the field 310 of the record, from "dubbing not designated" to "dubbing designated".

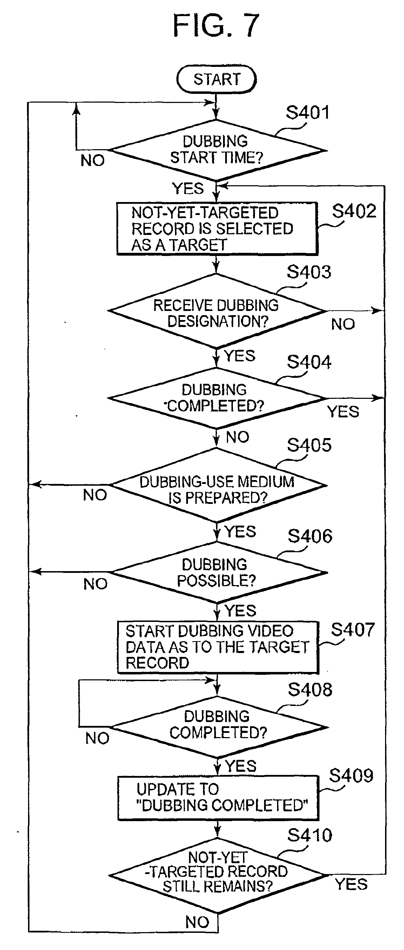

FIG. 7 is a flow diagram to explain automatic dubbing operation of the recording/reproducing apparatus 1 to which the second embodiment of the present invention has been applied. It is to be noted that the other operations are the same as those of the first embodiment.

When a predetermined dubbing start time comes (S401: YES), the control section 3 extracts one untargeted record from the setting recording section 602', and sets it as a targeted record (S402). It is preferable to set the dubbing start time at a time when a user rarely uses the recording/reproducing apparatus, such as a time in midnight. Next, the control section 3 determines whether or not the dubbing designation data registered in the field 310 of the target record indicates "dubbing designated". If it indicates "dubbing designated", the process in step S404 is carried out (S403: YES), and if it indicates "dubbing is not designated", the processing returns to step S402 (S403: NO).

In step S404, the control section 3 determines whether or not the dubbing status data registered in the field 309 of the target record indicates "dubbing completed", and if it indicates "dubbing completed", the processing returns to step S402 (S403: YES), and if it is "dubbing not performed", the processing proceeds to step S405 (S403: NO).

In the processing in step S405, the control section 3 determines whether or not a recording medium for dubbing is set in the dubbing-use recording section 605, and if it is not thus set, the processing returns to step S401. On the other hand, if it is thus set, the controls section 3 further determines whether or not the recording medium for dubbing is available for recording (S406). Specifically, the control section 3 detects an available area in the recording medium for dubbing, and compares thus detected available area and video data amount of the program associated with the target record. If there is an available area corresponding to the data amount, it is determined that the recording medium is available for recording. On the other hand, if there is not enough available area for the data amount or it is designated as overwrite protect, it is determined that the recording medium is not available for recording. When it is determined as available for recording (S406: YES), dubbing is performed as to the video data of the program associated with the target record to the dubbing-use recoding section 605 (S407). On the other hand, if it is determined as recording not available (S406: NO), the processing returns to step S401.

In the meantime, when the control section 3 completes dubbing of video data of the program associated with the target record (S408: YES), the control section 3 controls the recording/reproducing section 6, and changes the dubbing status data registered in the field 309 of the target record in the setting recording section 602', from "dubbing not performed" to "dubbing completed" (S409). Subsequently, the control section 3 returns the processing to step S402, if there still remains any untargeted record in the setting recording section 602' (S410: YES). Otherwise, the processing returns to step S401 (S410: NO).

According to the present embodiment as described above, the video data of the program, which is designated for dubbing, can be automatically saved as a backup in a recording medium for backup, for example, during a time zone when the user does not use the video data recording/reproducing apparatus 1.

### <<Third Embodiment>>

Next, the third embodiment of the present invention will be explained.

The present embodiment is directed to recording televised contents every week, the contents being broadcasted at a fixed day of the week and time in the first embodiment. The video data recording/reproducing apparatus of the present embodiment is different from that of the first embodiment as shown in FIG. 1 in the points that an operating section 5" is provided instead of the operating section 5, a setting recording section 602" is provided instead of the setting recording section 602. Other structural elements are the same as those of the first embodiment.

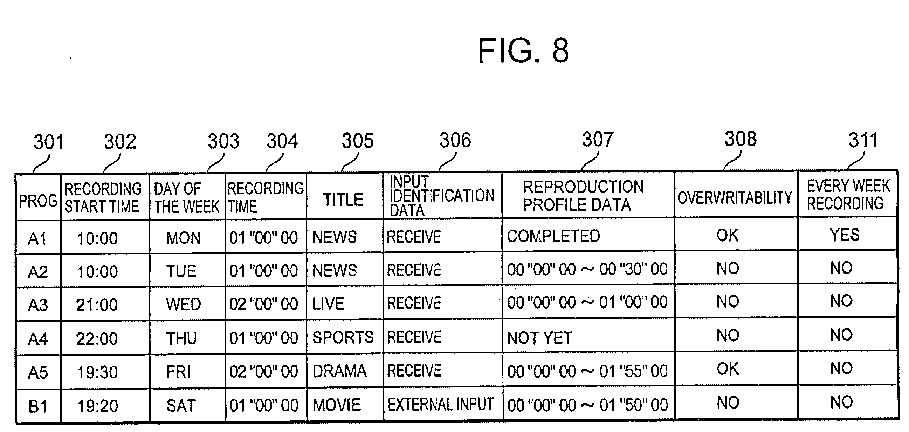

The operating section 5" is provided with an every week recording instruction key (not illustrated) in addition to the various operation keys provided in the operating section 5 of the first embodiment. FIG. 8 is an illustration showing an example of the settings recorded in the setting recording section 602". As illustrated in FIG. 8, a record of the video data corresponding to each program recorded in the setting recording section 602" further includes a field 311 which registers whether or not the video data of the program is recorded every week based on the recording start time, day of the week and recording time registered respectively in the fields 302, 303 and 304, as to each program recorded in the setting recording section 602 according to the first embodiment as shown in FIG. 2. This field is set as "every week recording is not performed" in the initial status when a new record is added in the setting recording section 602".

When the user designates a program and operates the every week recording instruction key on the operating section 5", the operating section 5" outputs an every week recording instruction signal together with the program designation to the control section 3. The control section 3 outputs to the recording/reproducing section 6 the every week instruction signal received from the operating section 5". The recording/reproducing section 6 specifies a record of the video data of the program designated by the every week recording instruction signal from the setting recording section 602", and changes the every week instruction data registered in the field 311 of the record, from "every week recording is not performed" to "every week recording is performed".

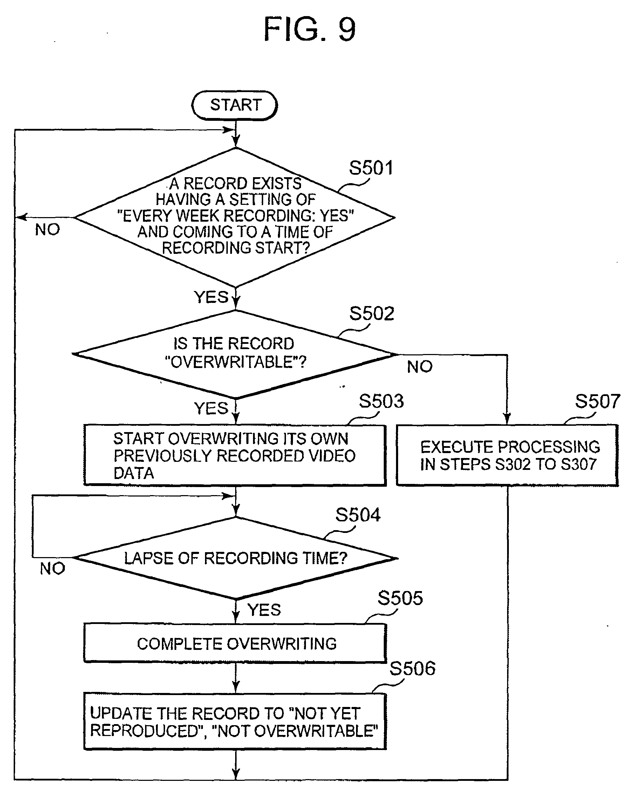

FIG. 9 is a flow diagram showing every week recording operation of the video data recording/reproducing apparatus 1 to which the third embodiment of the present invention has been applied. The other operations are the same as those of the first embodiment.

The control section 3 monitors a record of video data of each program recorded in the setting recording section 602". When the control section 3 detects a record as to which the every week recording instruction data registered in the field 311 indicates "every week recording is performed" and a recording start timing has come, which is specified by the recording start time and the day of the week respectively registered in the fields 302 and 303 (S501: YES), the control section 3 controls the switching section 2 according to the input identification data registered in the field 306. The control section 3 further outputs a video signal inputted from the switching section 2 to the recording/reproducing apparatus 6, as well as the every week recording start instruction together with the designation of the record thus detected. In receipt of the information above, the recording/reproducing section 6 determines whether or not overwriting is possible based on the overwritability data registered in the field 308 of the record designated by the every week recording reproducing start instruction (S502). If the overwritability data indicates "overwritable" (viewing/listening has been completed), the processing proceeds to step S503 (S502: YES), whereas if it indicates "not overwritable" (not yet viewed/listened to), the processing proceeds to step S507 (S502: NO).

In step S503, the recording/reproducing section 6 encodes a video signal inputted from the control section 3 into video data in MPEG format or the like, and overwrites thus encoded video data over the video data of the program associated with the record designated by the every week recording reproducing start instruction, which is recorded in the video recording section 601 (S503).

After a lapse of recording time registered in the field 304 of thus detected record, from the time when the control section 3 outputs the every week recoding/reproducing start instruction to the recording/reproducing section 6 (S504: YES), the control section 3 outputs an every week recording/reproducing end instruction to the recording/reproducing section 6. The control section 3 further stops outputting the video data having been inputted from the switching section 2, to the video recording section 6. In response thereto, the recording/reproducing section 6 completes recording of the video data to the video recording section 601 (S505). The control section 3 further controls the recording/reproducing section 6, to change the reproduction profile data registered in the field 307 of the record of the video data, which is registered in the setting recording section 602", to "not yet reproduced", and change the overwritability data registered in the field 308 to "not overwritable" (S506).

On the other hand, in step S507, processing similar to those in steps S302 to S307 in FIG. 3 are carried out. Accordingly, video data of the program is newly recorded in the available area in the video recording section 601, and simultaneously, the record of the video data of the program is newly recorded in the setting recording section 602".

Preferred embodiments of the present invention have been explained as described above.

The present invention is not limited to those embodiments as described above, and it is intended this invention be construed as including all modifications and alterations in design insofar as they come within the scope of the invention.

For example, in each of the above embodiments, the video data recording/reproducing apparatus 1 is constituted as the following: based on the input identification data for determining whether recorded video data is inputted from the receiving section 201 or from the external input terminal 202, if it is inputted from the external input terminal 202, it is determined that viewing and listening to the video data have not been completed yet, unless the video data has been reproduced entirely from the beginning to the end. If the video data is inputted from the receiving section 201, it is automatically determined whether or not viewing and listening to the video data have been completed, based on the information whether the proportion of the not-yet-reproduced time (or reproduced time) is less (equal to or more) than a predetermined value. However, the present invention is not limited to the constitution above. A viewing audience may change the settings arbitrarily by operating the operating section 5. For example, the operating section 5 may be provided with a selection key, a proportion setting key and the like. With the selection key, the audience selects an input source which supplies program video data, as to which it is determined that viewing and listening to the video data have not been completed yet unless the video data is reproduced entirely from the beginning to the end. With the proportion setting key, the audience sets a proportion of the not-yet-reproduced time in the recording time, based on which proportion it is determined that viewing and listening to the video data have been completed. In accordance with audience's, operation of those keys, the control section 3 may change the settings.

In each of the above embodiments, when reproducing is stopped in the course of reproducing one video data recorded in the video recording section 601, the reproduced proportion determination section 72 may calculate a proportion of not-yet-reproduced time (or reproduced time) in the recording time at the time when the reproduction was stopped, to store the obtained proportion. A user may select whether or not it is to be determined that viewing/listening to other program video data is completed, when, in the future, reproducing the video data is stopped within the time less than the proportion thus calculated (or at the time equal to or more than the proportion thus calculated). For example, an enter key is provided in the operating section 5. When reproducing is stopped on the way, a display image is outputted to the monitor 900: the image inquires the user whether or not to determine that viewing/listening to a video data to be reproduced in the future is completed when reproduction thereof is stopped at the timing less than the current proportion of not-yet-reproduced time in the recording time (or equal to more than the current proportion of reproduced time in the recording time). If the enter key is pressed, after that, the reproduced proportion determination section 72 will determine that viewing and listening to video data have already been completed when reproduction is stopped less than the proportion above (or equal to or more than the proportion above).

In each of the above embodiments, the viewing/listening determination section 7 is provided in the control section 3, but it may also be provided in the viewing/listening determination section 7 independently from the control section 3.

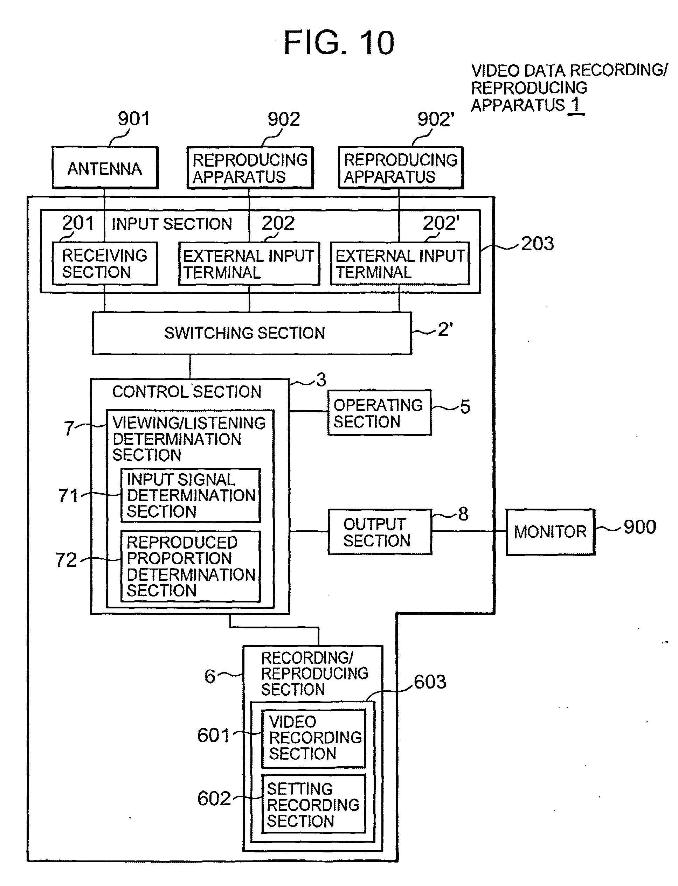

In each of the embodiments, the receiving section 201 for receiving video signals from the antenna 901 and the external input terminal 202 for receiving video signals from a reproducing apparatus 902 are provided one for each in the input section 203, and the switching section 2 is provided to select either one of the receiving section 201 and the external input terminal 202. However, the present invention is not limited to this constitution. It is also possible to constitute such that at least one for each of the receiving section 201 and the external input terminal 202 are provided in the input section 203, and the switching section 2 selects one receiving section 201 or one external input terminal 202 according to the input switching instruction signal. FIG. 10 is a variation example of the first embodiment of the present invention. In this example, the input section 203' includes a receiving section 201, and two external input terminals 202 and 202' respectively connected to the reproducing apparatus 902 and 902' which are different from each other. According to the input switching signal received from the operating section 5 via the control section 3, the switching section 2' selects any one of a video signal inputted from the receiving section 201, a video signal inputted from the external input terminal 202, and a video signal inputted from the external input terminal 202', and outputs thus selected video signal to the control section 3.

The disclosure of Japanese Patent Application Nos. 2004-091649 filed on March 26, 2004, and 2004-233059 filed on August 10, 2004, including specification, claims, drawings and abstract is incorporated herein by reference in its entirety.

## Claims

1. A video data recording/reproducing apparatus comprising,
a recording/reproducing section which records inputted video data , sets the recorded video data as erasable/overwritable, and reproduces the recorded video data with respect to each program, and
a viewing/listening determination section which determines whether or not viewing and listening to the program have been completed based on a reproduced proportion in the video data of the program, when reproducing of the video data by said recording/reproducing section is stopped at some midpoint of the program, wherein,
said viewing/listening determination section sets the video data of the program as erasable/overwritable, if said viewing/listening determination section determines that viewing and listening to the program recorded in said recording/reproducing section have been completed.

2. The apparatus according to claim 1, further comprising a receiving section which receives a broadcast signal, wherein,
said viewing/listening determination section determines that viewing and listening to the program have been completed, when the video data recorded in said recording/reproducing section is inputted as the broadcast signal received by said receiving section, and the reproduced proportion in the program is equal to or more than a predetermined reproduced proportion.

3. The apparatus according to claim 2, wherein,
said predetermined reproduced proportion is 80%.

4. The apparatus according to claim 2, further comprising an operating section which receives a setting instruction as to said predetermined reproduced proportion.

5. The apparatus according to claim 1, comprising,
an input section into which video data recorded in an external recording medium is inputted, wherein,
when the video data recorded in said recording/reproducing section is inputted from said input section and the program has been entirely reproduced, the viewing/listening determination section determines that viewing and listening to the program have been completed.

6. The apparatus according to claim 2, comprising,
an input section into which video data recorded in an external recording medium is inputted, wherein,
when the video data recorded in said recording/reproducing section is inputted from said input section and the program has been entirely reproduced, the viewing/listening determination section determines that viewing and listening to the program have been completed.

7. The apparatus according to claim 6, comprising,
a switching section which switches input signal of the video data to be recorded in said recording/reproducing section, wherein,
said recording/reproducing section records the input signal switched by said switching section by overwriting over the recorded video data, which has been set as erasable/overwritable.

8. The apparatus according to claim 1, further comprising a dubbing-use recording section which records the video data recorded in said recording/reproducing section by means of dubbing.

9. A reproducing method, comprising:
a recording step which records inputted video data and a reproducing step which reproduces the recorded video data with respect to each program,
a determining step which determines whether or not viewing and listening to the program have been completed, based on a reproduced proportion in the video data of the program, if reproducing of the video data in said reproducing step is stopped at some midpoint of the program, and
an setting erasable/overwritable step which sets the video data of the program as erasable/overwritable, if said determining step determines that viewing and listening to the program being recorded have been completed.

10. The method according to claim 9, wherein,
said determining step determines that viewing and listening to the program have been completed, if the video data being recorded is inputted as a broadcast signal and a reproduced proportion of the program is equal to or more than a predetermined reproduced proportion.

11. The method according to claim 10, wherein,
said predetermined reproduced proportion is 80%.

12. The method according to claim 10, further comprising a step of receiving a setting instruction as to said predetermined reproduced proportion.

13. The method according to claim 9, wherein,
when video data recorded in an external recording medium is inputted and the program has been entirely reproduced, said determining step determines that viewing and listening to the program have been completed.

14. The method according to claim 10, wherein,
when video data recorded in an external recording medium is inputted and the program has been entirely reproduced, said determining step determines that viewing and listening to the program have been completed.

15. The method according to claim 14, further comprising,
a switching step which switches an input signal of the video data to be recorded, and
a recording/overwriting step which records the input signal switched by overwriting over the recorded video data, which has been set as erasable/overwritable.

16. The method according to claim 9, further comprising,
a dubbing recording step which records the video data thus recorded by means of dubbing.
